# EUROPÄISCHE PATENTSCHRIFT

(11) **EP 3 749 507 B1**
(45) Veröffentlichungstag und Bekanntmachung des Hinweises auf die Patenterteilung: **19.01.2022**
(21) Anmeldenummer: 19703301.2
(22) Anmeldetag: 04.02.2019
(51) Int. Cl.: B29C 65/16, B23K 26/06, B23K 26/244, B23K 26/324, B23K 26/28, B23K 37/04, B23K 103/00

(54) **SPANNVORRICHTUNG UND ZUGEHÖRIGE LASERSCHWEISSEINRICHTUNG**
CLAMPING DEVICE AND ASSOCIATED LASER WELDING APPARATUS
DISPOSITIF DE SERRAGE ET DISPOSITIF DE SOUDAGE AU LASER ASSOCIÉ

(30) Priorität: 05.02.2018 DE 102018102494
(43) Veröffentlichungstag der Anmeldung: 16.12.2020
(73) Patentinhaber: Evosys Laser GmbH, 91058 Erlangen (DE)
(72) Erfinder: WETTER, Michael, 91361 Pinzberg (DE); KRAUS, Andreas, 90765 Fürth (DE); AHMETI, Kreshnik, 91052 Erlangen (DE)
(74) Vertreter: Dr. Gassner & Partner mbB
(86) Internationale Anmeldenummer: PCT/EP2019/052650
(87) Internationale Veröffentlichungsnummer: WO 2019/149938

(56) Entgegenhaltungen:
- EP-A1- 2 591 910
- WO-A1-2016/063720
- DE-A1-102011 087 405
- JP-A- 2001 246 488
- JP-A- 2007 313 821
- JP-A- 2013 203 026

## Beschreibung

Die Erfindung betrifft eine Spannvorrichtung zum Spannen von wenigstens zwei durch Bestrahlen mit einem Laserstrahl entlang einer Schweißkontur verschweißbaren Formteilen mit den Merkmalen des Oberbegriffs des Anspruchs 1.

Derartige, an sich bekannte Spannvorrichtungen werden als Komponenten von Laserschweißeinrichtungen eingesetzt, mit denen Kunststoffe, insbesondere thermoplastische Kunststoffe, gefügt werden können. Dazu werden zwei Formteile übereinander angeordnet, mit der Spannvorrichtung in Kontakt gebracht und gegeneinander verspannt. Während des Schweißverfahrens berühren sich die Fügeflächen der beiden Formteile. Mittels eines Laserstrahls werden die Fügeteile im Bereich der Fügeflächen geschmolzen, wodurch sie miteinander verschweißen.

In der DE 10 2011 087405 A1 wird eine gattungsgemäße Spannvorrichtung zum Spannen von mit einem Laserstrahl verschweißbaren Formteilen vorgeschlagen. Diese Spannvorrichtung umfasst eine Innenhalterung und eine Außenhalterung, die durch einen umlaufenden Durchtrittsspalt für den Laserstrahl voneinander getrennt sind. Die Innenhalterung und die Außenhalterung werden durch ein Verbindungselement relativ zu einander gehalten. Das Verbindungselement ist beweglich gelagert und wird in Abhängigkeit der Bewegung des Laserstrahls durch einen Antrieb bewegt. Dadurch kann sichergestellt werden, dass der Laserstrahl im Bereich des Verbindungselements beim Schweißvorgang nicht unterbrochen wird.

Die JP 2007 313821 A schlägt eine mehrteilige Spannvorrichtung vor, durch die sowohl Randbereiche als auch ein Innenbereich eines Formteils zusammengepresst werden, um eine Verformung des Formteils während des Schweißvorgangs zu verhindern.

Die JP 2013 203026 A beschreibt ein Laserschweißverfahren, um ein hohles Bauteil mit einem Deckel zu verschließen. Der Laserstrahl gelangt durch eine Maske auf das zu verschweißende Bauteil.

Das Dokument EP 2 591 910 A1 schlägt eine Laserschweißvorrichtung vor, die eine Vielzahl von einzelnen ansteuerbaren Laserstrahlemittern und einen Homogenisierer für die Laserstrahlung aufweist. Der Homogenisierer ist Bestandteil eines Trägers, durch den die zu verschweißten Formteile miteinander verspannt werden.

In der JP 2001 246488 A wird ein Laserschweißverfahren beschrieben, bei der zwei Bauteile während des Schweißvorgangs durch eine Druckkraft beaufschlagt werden.

In der WO 2016/063720 A1 wird ein Verfahren zum Verschweißen zweier Formteile mit Laserstrahlung beschrieben, bei dem eine Schablone auf das oberste Formteil gelegt wird. Die Schablone weist Öffnungen für die Laserstrahlung auf, sodass die Formteile in den Bereichen, in denen die Schablone Öffnungen aufweist, verschweißt werden können.

Beim Kunststoffschweißen mit Laserstrahl im Durchstrahlverfahren besteht das obere, einer Laserquelle zugewandte Formteil zumeist aus einem für den Laserstrahl transparenten Material und das untere Formteil aus einem für den Laserstrahl absorbierenden Material. Durch die Bestrahlung mit dem Laser mit einer Wellenlänge im nahen Infrarot schmelzen die aneinandergrenzenden Kontaktflächen auf und verbinden sich während der anschließenden Abkühlung unter Druck. Die dabei benutzte Spannvorrichtung hat die Aufgabe, die beiden Fügeteilhälften präzise zu positionieren und einen möglichst gleichmäßigen Fügedruck entlang der herzustellenden Schweißnaht einzuleiten. Dementsprechend kommt der Spannvorrichtung eine große Bedeutung für die Erzeugung einer qualitativ hochwertigen Schweißverbindung zu.

Laserschweißeinrichtungen mit einer derartigen Spannvorrichtung benötigen ein Bewegungssystem für den Laser, um den Laserstrahl entlang einer vorgegebenen Schweißkontur zu bewegen. Wenn ein Galvanometerscanner als Bewegungssystem eingesetzt wird, kann es zu Einschränkungen kommen, da die vorgegebene Schweißnaht für den durch den Galvanometerscanner abgelenkten Laserstrahl frei zugänglich sein muss. Objekte oder Hindernisse entlang des Laserstrahls würden hingegen zu einer Beeinträchtigung der Qualität der herzustellenden Schweißverbindung führen.

In der WO 2008/125263 A1 wird eine Spannvorrichtung beschrieben, die Folgendes umfasst: eine erste, als Aufnahme für ein erstes Formteil dienende erste Spannplatte, eine zweite Spannplatte, die zum Beaufschlagen des ersten Formteils und eines darauf angeordneten zweiten Formteils mit einer Spannkraft ausgebildet ist, einen äußeren, eine Ausnehmung aufweisenden Spannbacken und einen in der Ausnehmung angeordneten inneren Spannbacken, die beide gemeinsam die zweite Spannplatte bilden, sowie einen abschnittsweise zwischen dem äußeren Spannbacken und dem inneren Spannbacken ausgebildeten Durchtrittsspalt für einen Laserstrahl. Daneben umfasst die Spannvorrichtung ein oder mehrere den äußeren Spannbacken mit dem inneren Spannbacken abschnittsweise verbindende, den Durchtrittsspalt überbrückende Befestigungselemente.

Diese Befestigungselemente können z. B. als schmale Verbindungsstreben ausgebildet sein, um den Laserstrahl möglichst wenig abzuschatten. Bei dieser herkömmlichen Spanntechnik ist ein Innenspannstempel üblicherweise über dünne Metallstege mit einer Außenspanntechnik fest verbunden. Unterhalb der Metallstege kann keine Laserenergie direkt eingebracht werden, da der Laserstrahl dort durch den Metallsteg abgeschattet ist. Stattdessen wird die Fügezone in dem Bereich unterhalb der Metallstege nur indirekt durch den Fluss des schmelzflüssigen Materials zu einem gewissen Grad aufgeschmolzen, wodurch eine Schweißverbindung der Fügepartner entsteht.

Diese herkömmliche Spannvorrichtung weist allerdings einige Nachteile auf. Da die Stege direkt mit dem Laserstrahl bestrahlt werden, kann es nach einer gewissen Betriebsdauer zu einer Schädigung der Stege kommen, so dass die Lebensdauer der Spannvorrichtung begrenzt ist. Da im Bereich der Stege durch die Abschattung eine Strahlabschwächung auftritt, muss diese über die Prozessführung, d.h. durch die Steuerung und Modulation des Laserstrahls, kompliziert kompensiert werden. Aufgrund des ungleichmäßigen Energieeintrags ist es schwierig, eine absolut dichte Schweißnaht herzustellen, die für bestimmte Anwendungen jedoch zwingend erforderlich ist.

Der Erfindung liegt somit die Aufgabe zu Grunde, eine Spannvorrichtung anzugeben, die die Herstellung einer homogenen und ununterbrochenen Schweißnaht ermöglicht.

Zur Lösung dieser Aufgabe ist eine Spannvorrichtung mit den Merkmalen des Anspruchs 1 vorgesehen.

Vorteilhafte Weiterbildungen der Erfindung sind in den Unteransprüchen angegeben.

Die Erfindung beruht auf der Idee, eine Spannvorrichtung vorzusehen, die im Bereich eines Befestigungselements ein Spiegelelement umfasst, das so angeordnet ist, dass ein Laserstrahl auf einen von dem jeweiligen Befestigungselement verdeckten Abschnitt der Schweißkontur reflektiert wird. Der Spiegel wird dazu in der Nähe derjenigen Bereiche angeordnet, in denen sich ein Befestigungselement befindet. Das Befestigungselement würde bei einer herkömmlichen Spannvorrichtung eine Abschattung eines Abschnitts der herzustellenden Schweißvorrichtung bewirken. Mittels des Spiegels wird der Laserstrahl jedoch so umgelenkt, dass er sich unterbrechungsfrei an die zuvor ohne Umlenkung hergestellte Schweißnaht anschließt. Auf diese Weise kann eine kontinuierliche Schweißnaht erzeugt werden. Mittels des Spiegelelements wird der Laserstrahl lediglich im Bereich des Befestigungselements umgelenkt, so dass der Laserstrahl von dem Spiegelelement reflektiert wird und auf die Kontaktflächen der beiden zu verbindenden Formteile auftrifft. Dort findet durch die Energie des Laserstrahls ein Aufschmelzen der Kunststoffe statt. Das Abkühlen der Fügepartner erfolgt unter der Wirkung des von der Spannvorrichtung aufgebrachten Drucks, wodurch die gewünschte Schweißverbindung entsteht. Die erfindungsgemäße Spannvorrichtung weist den Vorteil auf, dass auch im Bereich der Befestigungselemente keine kompliziere Prozessführung, beispielsweise eine Anpassung der Leistung des Lasers, erforderlich ist. Somit kann der Laserstrahl praktisch ohne eine wesentliche Änderung von Prozessparametern entlang der gewünschten Schweißkontur geführt werden.

Eine bevorzugte Variante der erfindungsgemäßen Spannvorrichtung sieht vor, dass das Spiegelelement an dem äußeren Spannbacken oder an dem inneren Spannbacken oder an einem Befestigungselement angeordnet ist. Grundsätzlich kommen alle erwähnten Positionen für die Anordnung des Spiegelelements infrage. Die Auswahl der jeweiligen Positionen erfolgt dabei anhand der Form und Größe des äußeren und des inneren Spannbackens und der Platzverhältnisse.

Bei der erfindungsgemäßen Spannvorrichtung wird es besonders bevorzugt, dass das Spiegelelement abnehmbar an einer Halterung angeordnet ist. Der Begriff "Halterung" bezeichnet eine mechanische Befestigung, die das Spiegelelement in irgendeiner Weise haltert. Beispielsweise kann die Befestigung durch eine Schraubverbindung, eine Klemmverbindung, eine kraftschlüssige und/oder eine formschlüssige Verbindung erfolgen. Das Spiegelelement kann beispielsweise in eine entsprechende Nut eingeschoben und ggf. in der Nut fixiert sein. Eine abnehmbare Befestigung des Spiegelelements erleichtert einen späteren Austausch im Falle einer Beschädigung oder wenn eine Änderung der Schweißkontur erforderlich ist.

Das Spiegelelement der erfindungsgemäßen Spannvorrichtung kann eine ebene oder eine gekrümmte Oberfläche aufweisen und/oder aus mehreren Spiegelabschnitten zusammengesetzt sein. Dadurch ergeben sich vielfältige Möglichkeiten, um den Laserstrahl von dem Galvanometerscanner mittels des Spiegelelements abzulenken, um eine bestimmte Stelle des Formteils zu bestrahlen.

Das bei der erfindungsgemäßen Spannvorrichtung vorgesehene Befestigungselement ist vorzugsweise als Platte ausgebildet und weist eine Durchtrittsöffnung für den Laserstrahl auf. Alternativ kann anstelle einer Durchtrittsöffnung auch eine einseitig offene Platte vorgesehen sein; aus Gründen der Stabilität wird jedoch eine die Durchtrittsöffnung aufweisende Platte bevorzugt.

Die Durchtrittsöffnung kann beispielsweise viereckig, quadratisch, rund oder elliptisch ausgebildet sein. In diesem Zusammenhang kann es vorgesehen sein, dass die Durchtrittsöffnung des Befestigungselements bezüglich des Durchtrittsspalts nach außen versetzt ist. Demnach befindet sich die Durchtrittsöffnung vorzugsweise außerhalb der herzustellenden Schweißkontur.

Das vorzugsweise als Platte ausgebildete Befestigungselement kann lösbar mit den inneren und den äußeren Spannbacken verbunden sein. Dementsprechend bildet das Befestigungselement eine die beiden Spannbacken überbrückende Verbindung.

Daneben betrifft die Erfindung eine Laserschweißeinrichtung, mit einem Laser zum Emittieren eines Laserstrahls und einem Bewegungssystem für den Laser. Die erfindungsgemäße Laserschweißeinrichtung zeichnet sich dadurch aus, dass sie eine Spannvorrichtung der beschriebenen Art aufweist.

Vorzugsweise weist der Laserstrahl der erfindungsgemäßen Laserschweißeinrichtung eine Wellenlänge zwischen 600 nm und 2.500 nm auf.

Vorzugsweise ist das Bewegungssystem der erfindungsgemäßen Laserschweißeinrichtung als Galvanometerscanner ausgebildet.

Die Erfindung wird nachfolgend anhand von Ausführungsbeispielen unter Bezugnahme auf die Zeichnungen erläutert. Die Zeichnungen sind schematische Darstellungen und zeigen:
- Fig. 1: die wesentlichen Komponenten einer erfindungsgemäßen Laserschweißeinrichtung,
- Fig. 2: eine vergrößerte geschnittene Ansicht einer erfindungsgemäßen Spannvorrichtung,
- Fig. 3: eine Draufsicht auf die Spannvorrichtung, und
- Fig. 4: eine geschnittene Ansicht eines Befestigungselements der erfindungsgemäßen Spannvorrichtung entlang der Linie IV-IV von Fig. 3.

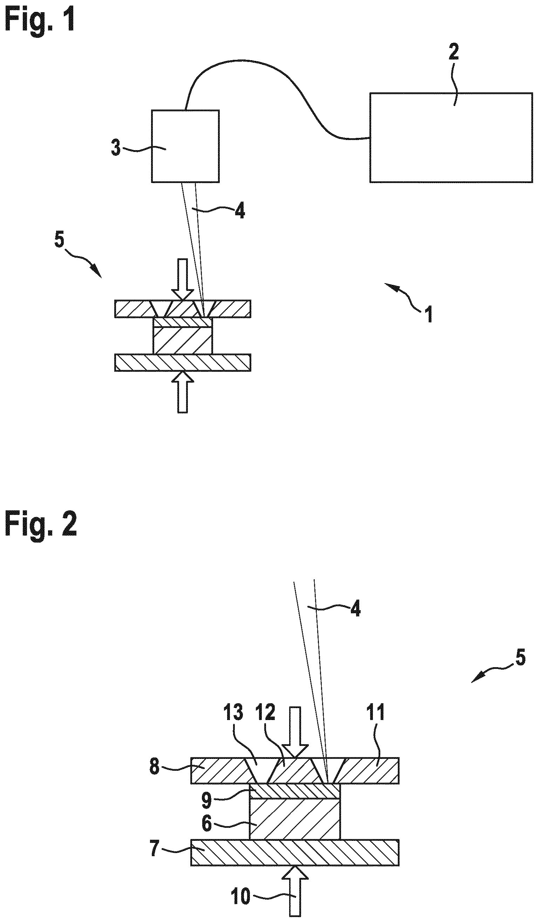

Die in Fig. 1 schematisch dargestellte Laserschweißeinrichtung 1 umfasst einen Laser 2 (Lasersystem) einschließlich einer Steuerung sowie eine Laseroptik einschließlich eines als Galvanometerscanner ausgebildeten Bewegungssystems 3.

Der Galvanometerscanner ist dazu ausgebildet, den Laserstrahl auf eine bestimmte Position eines Formteils zu richten. Der Laser 2 umfasst eine Strahlquelle zur Erzeugung eines Laserstrahls 4 (Bearbeitungsstrahlung), das Bewegungssystem 3 dient zur Bewegung des Laserstrahls.

Daneben umfasst die Laserschweißeinrichtung 1 eine Spannvorrichtung 5, die in Fig. 2 in einer vergrößerten Darstellung gezeigt ist. Die Spannvorrichtung 5 umfasst eine erste, als Aufnahme für ein erstes Formteil 6 dienende erste Spannplatte 7 sowie eine zweite Spannplatte 8, die zum Beaufschlagen des ersten Formteils 6 und eines darauf angeordneten zweiten Formteils 9 mit einer Spannkraft ausgebildet ist. In Fig. 2 wird die Spannkraft, die die beiden Formteile 6, 9 zusammendrückt, durch zwei Pfeile 10 dargestellt. In Fig. 2 erkennt man, dass es sich bei der ersten Spannplatte 7 um die untere Spannplatte handelt, auf der in dieser Reihenfolge das erste Formteil 6 und das zweite Formteil 9 angeordnet sind. Das obere, zweite Formteil 9 wird durch die zweite, obere Spannplatte 8 mit der Spannkraft (Druckkraft) beaufschlagt.

Die zweite Spannplatte 8 wird durch einen äußeren Spannbacken 11 und einen inneren Spannbacken 12 gebildet. Zwischen dem äußeren Spannbacken 11 und dem inneren Spannbacken 12 ist ein Durchtrittsspalt 13 für den Laserstrahl gebildet. In der geschnittenen Ansicht von Fig. 2 sind zwei verschiedene Stellen des Durchtrittsspalts 13 zu sehen.

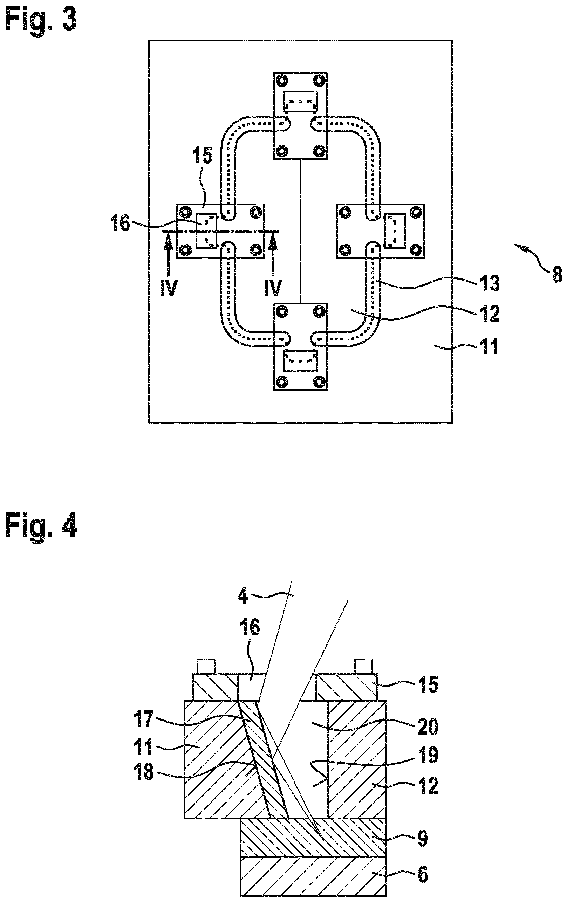

Fig. 3 zeigt die obere, zweite Spannplatte 8 mit dem äußeren Spannbacken 11, dem inneren Spannbacken 12 und den dazwischen angeordneten Durchtrittsspalt 13. Der äußere Spannbacken 11 ist wie ein Rahmen ausgebildet, der den inneren Spannbacken 12 umgibt. In dem Durchtrittsspalt 13 ist durch eine punktierte Linie eine Schweißkontur 14 dargestellt. In dem dargestellten Ausführungsbeispiel besitzt die Schweißkontur 14 eine rechteckige Grundform mit abgerundeten Ecken.

Der äußere Spannbacken 11 und der innere Spannbacken 12 sind durch mehrere Befestigungselemente 15 miteinander verbunden. Jedes Befestigungselement überbrückt den Durchtrittsspalt 13. Die Befestigungselemente 15 sind plattenförmig ausgebildet und einerseits mit dem äußeren Spannbacken 11 und andererseits mit dem inneren Spannbacken 12 verschraubt.

In Fig. 3 erkennt man, dass jedes Befestigungselement 15 an seinen gegenüberliegenden längeren Seiten näherungsweise halbkreisförmige Ausnehmungen aufweist.

Fig. 4 ist eine geschnittene Ansicht eines Befestigungselements entlang der Linie IV-IV von Fig. 3. An dem Befestigungselement 15 ist eine Durchtrittsöffnung 16 für den Laserstrahl 4 ausgebildet. In diesem Ausführungsbeispiel ist die Durchtrittsöffnung 16 rechteckig, bei anderen Ausführungen kann die Durchtrittsöffnung jedoch auch eine andere Form besitzen.

In Fig. 4 ist dargestellt, dass an dem Befestigungselement 15 ein Spiegelelement 17 angeordnet ist, das an einer Außenseite 18 des äußeren Spannbackens 11 angebracht ist. Das Spiegelelement 17 ist unter einem Winkel, d. h. schräg bezüglich der durch das plattenförmige Befestigungselement 15 gebildeten Ebene, angeordnet. Zwischen dem Spiegelelement 17 und einer Fläche 19 des inneren Spannbackens 12 erstreckt sich ein Freiraum 20. Ein von dem Laser 2 emittierter Laserstrahl 4 passiert die Durchtrittsöffnung 16 des plattenförmigen Befestigungselements 15 und trifft auf das Spiegelelement 17 und wird reflektiert. Der Einfallswinkel des Laserstrahls 4 ist gleich dem Ausfallswinkel. Anschließend passiert der Laserstrahl 4 den Freiraum 20 und trifft auf das zweite Formteil 9 auf. Die Stelle, an der Laserstrahl 4 auf das zweite Formteil 9 auftrifft, befindet sich unterhalb des plattenförmigen Befestigungselements 15, jedoch nicht senkrecht unterhalb der Durchtrittsöffnung 16. Auf diese Weise ist es möglich, durch Umlenken des Laserstrahls 4 mittels des Spiegelelements 17 den Laserstrahl auf solche Stellen zu richten, die ansonsten durch das Befestigungselement 15 verdeckt wären, so dass eine kontinuierliche, ununterbrochene Schweißkontur erzeugt werden kann, ohne dass während des Schweißprozesses eine aufwändige Regelung des Laserstrahls, beispielsweise durch eine Verringerung oder Erhöhung der Strahlungsleistung, erforderlich ist.

### Bezugszeichenliste

- 1: Laserschweißeinrichtung
- 2: Laser
- 3: Bewegungssystem
- 4: Laserstrahl
- 5: Spannvorrichtung
- 6: erstes Formteil
- 7: erste Spannplatte
- 8: zweite Spannplatte
- 9: zweites Formteil
- 10: Pfeil
- 11: äußere Spannbacke
- 12: innere Spannbacke
- 13: Durchtrittsspalt
- 14: Schweißkontur
- 15: Befestigungselement
- 16: Durchtrittsöffnung
- 17: Spiegelelement
- 18: Außenseite
- 19: Fläche
- 20: Freiraum

## Patentansprüche

1. Spannvorrichtung (5) zum Spannen von wenigstens zwei durch Bestrahlen mit einem Laserstrahl (4) entlang einer Schweißkontur (14) verschweißbaren Formteilen (6, 9), umfassend:
- eine erste, als Aufnahme für ein erstes Formteil dienende erste Spannplatte (7),
- eine zweite Spannplatte (8), die zum Beaufschlagen des ersten Formteils (6) und eines darauf angeordneten zweiten Formteils (9) mit einer Spannkraft ausgebildet ist,
- einen äußeren, eine Ausnehmung aufweisenden Spannbacken (11) und einen in der Ausnehmung angeordneten inneren Spannbacken (12), die gemeinsam die zweite Spannplatte (8) bilden,
- einen abschnittsweise zwischen dem äußeren Spannbacken (11) und dem inneren Spannbacken (12) ausgebildeten Durchtrittsspalt (13) für einen Laserstrahl (4),
- ein oder mehrere den äußeren Spannbacken (11) mit dem inneren Spannbacken (12) abschnittsweise verbindende, den Durchtrittsspalt (13) überbrückende Befestigungselemente (15), **dadurch gekennzeichnet, dass** die Spannvorrichtung (5) im Bereich eines Befestigungselements (15) ein Spiegelelement (17) umfasst, das so angeordnet ist, dass ein Laserstrahl (4) auf einen von dem jeweiligen Befestigungselement (15) verdeckten Abschnitt der Schweißkontur (14) reflektiert wird.

2. Spannvorrichtung nach Anspruch 1, wobei das Spiegelelement (17) an dem äußeren Spannbacken (11) oder an dem inneren Spannbacken (12) oder an einem Befestigungselement (15) angeordnet ist.

3. Spannvorrichtung nach Anspruch 1 oder 2, wobei das Spiegelelement (17) abnehmbar an einer Halterung angeordnet ist.

4. Spannvorrichtung nach einem der vorangehenden Ansprüche, wobei das Spiegelelement (17) eine ebene oder eine gekrümmte Oberfläche aufweist oder aus mehreren Spiegelabschnitten zusammengesetzt ist.

5. Spannvorrichtung nach einem der vorangehenden Ansprüche, wobei das Befestigungselement (15) als Platte ausgebildet ist und eine Durchtrittsöffnung (16) für den Laserstrahl (4) aufweist.

6. Spannvorrichtung nach Anspruch 5, wobei die Durchtrittsöffnung (16) des Befestigungselements (15) bezüglich des Durchtrittsspalts (13) nach außen versetzt ist.

7. Laserschweißeinrichtung, mit einem Laser (2) zum Emittieren eines Laserstrahls (4) und einem Bewegungssystem (3) für den Laser (2), **dadurch gekennzeichnet, dass** die Laserschweißeinrichtung (1) eine Spannvorrichtung (5) nach einem der Ansprüche 1 bis 6 aufweist.

8. Laserschweißeinrichtung nach Anspruch 7, wobei der Laserstrahl (4) eine Wellenlänge zwischen 600 nm und 2.500 nm besitzt.

9. Laserschweißeinrichtung nach Anspruch 7 oder 8, wobei das Bewegungssystem (3) als Galvanometerscanner ausgebildet ist.

## Claims

1. A clamping apparatus (5) for clamping at least two shaped parts (6, 9) which may be welded along a welding contour (14) by irradiation with a laser beam (4), comprising:
- a first clamping plate (7) used as a holder for a first shaped part,
- a second clamping plate (8) which is designed to apply a clamping force to the first shaped part (6) and a second shaped part (9) arranged thereon,
- an outer clamping jaw (11) comprising a recess and an inner clamping jaw (12) arranged in the recess, which together form the second clamping plate (8),
- a passage gap (13) for a laser beam (4) formed in sections between the outer clamping jaw (11) and the inner clamping jaw (12),
- one or more fastening elements (15) which connect the outer clamping jaw (11) with the inner clamping jaw (12) in sections and which bridge the passage gap (13), **characterised in that** the clamping apparatus (5) comprises, in the region of a fastening element (15), a mirror element (17) which is arranged such that a laser beam (4) is reflected onto a section of the welding contour (14) concealed by the fastening element (15).

2. The clamping apparatus according to claim 1, wherein the mirror element (17) is arranged on the outer clamping jaw (11) or on the inner clamping jaw (12) or on a fastening element (15).

3. The clamping apparatus according to claim 1 or 2, wherein the mirror element (17) is removably arranged on a holder.

4. The clamping apparatus according to any one of the preceding claims, wherein the mirror element (17) has a flat or a curved surface or is composed of a plurality mirror sections.

5. The clamping apparatus according to any one of the preceding claims, wherein the fastening element (15) is designed as a plate and has a passage opening (16) for the laser beam (4).

6. The clamping apparatus according to claim 5, wherein the passage opening (16) of the fastening element (15) is offset outwards with respect to the passage gap (13).

7. A laser welding device, comprising a laser (2) for emitting a laser beam (4) and a movement system (3) for the laser (2), **characterised in that** the laser welding device (1) comprises a clamping apparatus (5) according to any one of claims 1 to 6.

8. The laser welding device according to claim 7, wherein the laser beam (4) has a wavelength between 600 nm and 2,500 nm.

9. The laser welding device according to claim 7 or 8, wherein the movement system (3) is designed as a galvanometer scanner.

## Revendications

1. Dispositif de serrage (5) pour le serrage d'au moins deux pièces moulées (6, 9) pouvant être soudées par irradiation par un rayon laser (4) le long d'un contour de soudage (14), comprenant :
- une première plaque de serrage (7) servant de logement pour une première pièce moulée,
- une deuxième plaque de serrage (8) qui est conçue pour appliquer une force de serrage sur la première pièce moulée (6) et sur une deuxième pièce moulée (9) disposée sur celle-ci,
- une mâchoire de serrage extérieure (11) présentant une cavité et une mâchoire de serrage intérieure (12) disposée dans la cavité, formant ensemble la deuxième plaque de serrage (8),
- une fente de passage (13) pour un rayon laser (4) formée par sections entre la mâchoire de serrage extérieure (11) et la mâchoire de serrage intérieure (12),
- un ou plusieurs éléments de fixation (15) reliant par sections la mâchoire de serrage extérieure (11) à la mâchoire de serrage intérieure (12) et pontant la fente de passage (13), **caractérisé en ce que** le dispositif de serrage (5) comporte dans la zone d'un élément de fixation (15) un élément miroir (17) qui est disposé de telle façon qu'un rayon laser (4) est réfléchi sur une section du contour de soudage (14) couverte par l'élément de fixation (15) respectif.

2. Dispositif de serrage selon revendication 1, en ce que l'élément miroir (17) est disposé au niveau de la mâchoire de serrage extérieure (11) ou au niveau de la mâchoire de serrage intérieure (12) ou au niveau d'un élément de fixation (15).

3. Dispositif de serrage selon la revendication 1 ou 2, en ce que l'élément miroir (17) est disposé de manière amovible au niveau d'un support.

4. Dispositif de serrage selon l'une des revendications précédentes, en ce que l'élément miroir (17) comporte une surface plane ou recourbée ou est composé de plusieurs sections miroir.

5. Dispositif de serrage selon l'une des revendications précédentes, en ce que l'élément de fixation (15) est réalisé sous forme de plaque et comporte une ouverture de passage (16) pour le rayon laser (4).

6. Dispositif de serrage selon la revendication 5, en ce que l'ouverture de passage (16) de l'élément de fixation (15) par rapport à la fente de passage (13) est décalée vers l'extérieur.

7. Dispositif de soudage au laser comprenant un laser (2) pour émettre un rayon laser (4) et un système de déplacement (3) pour le laser (2), **caractérisé en ce que** le dispositif de soudage au laser (1) comporte un dispositif de serrage (5) selon l'une des revendications 1 à 6.

8. Dispositif de soudage au laser selon la revendication 7, en ce que le rayon laser (4) a une longueur d'onde comprise entre 600 nm et 2500 nm.

9. Dispositif de soudage au laser selon la revendication 7 ou 8, en ce que le système de déplacement (3) est réalisé en tant que scanner galvanométrique.
